(19) Europäisches Patentamt
European Patent Office
Office européen des brevets

(11) **EP 4 375 091 B1**

(12) **EUROPEAN PATENT SPECIFICATION**

(45) Date of publication and mention
of the grant of the patent:
**16.07.2025 Bulletin 2025/29**

(21) Application number: **22209592.9**

(22) Date of filing: **25.11.2022**

(51) International Patent Classification (IPC):
**B60C 11/24** (2006.01)    **B60C 99/00** (2006.01)

(52) Cooperative Patent Classification (CPC):
**B60C 11/246; B60C 99/006; G01M 17/02; G01N 3/56; G01N 19/02**

(54) **METHOD FOR THE EVALUATION OF THE CRITICAL SLIP DISTANCE**

VERFAHREN ZUR AUSWERTUNG DES KRITISCHEN SCHLUPFABSTANDS

PROCÉDÉ D'ÉVALUATION DE LA DISTANCE DE GLISSEMENT CRITIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**29.05.2024 Bulletin 2024/22**

(73) Proprietor: **BRIDGESTONE CORPORATION**
Chuo-ku
Tokyo 104-8340 (JP)

(72) Inventors:
• **AGORETTI, Pasquale**
00128 Roma (IT)
• **RUGGIERO, Davy**
00128 Rome (IT)
• **KALISKE, Michael**
01062 Dresden (DE)
• **HARTUNG, Felix**
01062 Dresden (DE)
• **GARCIA TZINTZUN, Mario Alejandro**
01062 Dresden (DE)

(74) Representative: **Marchetti, Alessio**
**Bridgestone Europe NV/SA - Italian Branch Technical Center**
**Via del Fosso del Salceto, 13/15**
**00128 Roma (IT)**

(56) References cited:
EP-A1- 1 857 301       EP-A1- 3 318 422
JP-A- 2010 237 023     JP-A- 2011 148 465
JP-A- 2015 123 941     JP-A- 2016 045 047

• EMAMI ANAHITA ET AL: "Investigation of tribological behavior of Styrene-Butadiene Rubber compound on asphalt-like surfaces", TRIBOLOGY INTERNATIONAL, vol. 136, 5 April 2019 (2019-04-05) - 5 April 2019 (2019-04-05), pages 487 - 495, XP085690950, ISSN: 0301-679X, DOI: 10.1016/J.TRIBOINT.2019.04.002
• CHO J R ET AL: "Abrasive wear amount estimate for 3D patterned tire utilizing frictional dynamic rolling analysis", TRIBOLOGY INTERNATIONAL, ELSEVIER LTD, AMSTERDAM, NL, vol. 44, no. 7, 15 February 2011 (2011-02-15), pages 850 - 858, XP028408117, ISSN: 0301-679X, [retrieved on 20110302], DOI: 10.1016/J.TRIBOINT.2011.02.007
• GAFVERT M ET AL: "A novel semi-empirical tyre model for combined slips", VEHICLE SYSTEM DYNAMICS: INTERNATIONAL JOURNAL OF VEHICLE MECHANICS AND MOBILITY, TAYLOR & FRANCIS, GB, vol. 43, no. 5, 1 May 2005 (2005-05-01), pages 351 - 384, XP002459819, ISSN: 0042-3114, DOI: 10.1080/00423110412331282896

## Description

## TECHNICAL FIELD

The present invention is generally directed to methods for determining a critical slip distance, CSD, for a sample. The present methods may for example be used for evaluating wear of tires by determining the critical slip distance of a tire contact patch.

## BACKGROUND

Wear experiments at tire-level are complex and expensive. Several methods are described in the state of art for the prediction of wear performance. In particular, simulations are often used on this purpose, but proper inputs related to the actual contact conditions and the abrasion characteristics of materials have to be properly assessed in order to properly compute the energy leading to wear and achieve reliable results from the simulations.

In particular, a fundamental input required by Wear Simulations is the "Critical Slip Distance" (CSD), i.e., the distance starting from which the tread blocks show a constant wear rate, which cannot be simply and intuitively provided by standard friction and abrasion tests.

Currently, friction and abrasion characterization of the material are carried out by means of sliding tests on small rubber wheels, which does not provide any information about the actual contact conditions, or by using a linear friction tester with rubber blocks, which are tested in full sliding mode. Anyway, these kinds of tests are not able to provide any information about the CSD.

For this purpose, a new methodology has been specifically designed to determine the CSD by means of linear friction tests with rubber samples in different testing conditions.

Emami Anahita et al.: "Investigation of tribological behavior of StyreneButadiene Rubber compound on asphalt-like surfaces", Tribology International, Volume 136, August 2019, Pages 487-495 discloses tribological behavior of StyreneButadiene Rubber (SBR) compound reinforced by silica and carbon-black fillers on two different asphalt-like surfaces using theoretical and experimental approaches. Linear sliding friction and wear tests were performed on two different roofing asphalt papers. The surface roughness power spectra of asphalts and the master curves of the large-strain viscoelastic modulus of SBR compound were used to model the contact area and friction coefficient theoretically.

Cho J. R. et al.: "Abrasive wear amount estimate for 3D patterned tire utilizing frictional dynamic rolling analysis", Tribology International, Volume 44, Issues 7-8, July 2011, Pages 850-858 discloses a numerical technique for predicting the wear amount of automobile tire. A power function wear model derived based on the laboratory testing of rubber abrasion is adopted to correlate the wear rate of tread rubber blocks with the frictional energy dissipation, and the driving and loading conditions of the tire in the outdoor wear test are extracted from the virtual driving simulation using ADAMS. The tire frictional energy rates produced in each driving mode are computed by the frictional dynamic rolling analysis of 3D patterned tire model.

## SUMMARY

According to a first aspect of the present invention, a method for determining a critical slip distance (CSD) for a sample is provided. The method comprises providing a force to the sample towards a sliding surface. The method further comprises sliding the sample n times along the sliding surface over a plurality of intervals, the plurality of intervals having different widths w, n being an integer $\geq 1$, determining, for each width $w_i$, a respective wear rate $m(w_i)=\Delta M/(n * w_i)$ of a plurality of wear rates $m(w)$, wherein $\Delta M$ is a weight difference of the sample after sliding the sample over n intervals of width $w_i$, and determining, based on the plurality of wear rates and the respective widths, the CSD as a width $w_o$, wherein, for any $w > w_o$,

$$\frac{\partial m(w)}{\partial w} = 0.$$

According to an example of the first aspect, the widths $w_i$ of the plurality of intervals are integer dividers of a total length of the sliding surface.

According to another example of the first aspect, the method may further comprise sliding the sample over multiple intervals of each width $w_i$, obtaining the weight difference $\Delta M$ by weighing the sample before and after sliding over n intervals of width $w_i$, and determining the wear rate based on the weight difference $\Delta M$ and a total slidden distance.

According to another example of the first aspect, the wear rate m is a weight loss per total slidden distance.

According to another example of the first aspect, the total slidden distance is equal for each one of the widths $w_i$.

According to another example of the first aspect, the force is lifted after sliding the sample along each one of the intervals and the force is reapplied before sliding the sample along the subsequent interval.

According to another example of the first aspect, the sample is slidden along the sliding surface at a substantially constant speed.

According to another example of the first aspect, the method further comprises identifying a first distance, along which a static friction force exceeds a sliding friction force, identifying a second distance, along which the sliding friction force exceeds the static friction force and determining the CSD further based on the first distance.

According to another example of the first aspect, the method further comprises providing a sliding surface having a total length, sliding the sample over the sliding surface multiple times in steps of each of the plurality of widths w and measuring the plurality of wear rates for each one of the plurality of widths w.

According to another example of the first aspect, the CSD is measured based on any one of a geometry of the sample, a material property of the sample, a texture of the sliding surface, an amount of the force, an amount of the sliding speed, an amount of the acceleration to reach the set sliding speed, and a temperature of the sample.

According to a second aspect of the present invention, a computer-implemented method for estimating the wear of a tire is provided. The method comprises providing a wear model of the tire configured to convert a frictional energy rate into a wear, wherein the wear model is based on moveable and non-moveable parts, with the moveable parts providing higher wear than the non-moveable parts, dividing a contact patch of the tire into a moveable part and a non-moveable part, wherein the non-moveable part exhibits substantially no movement relative to a substrate of the tire, and wherein the moveable part exhibits movement relative to a substrate of the tire; estimating the wear of the tire based on the wear model and the divided contact patch.

According to an example of the second aspect, the non-moveable part provides substantially no wear.

According to another example of the second aspect, the non-moveable part has a first width, and a critical slip distance (CSD) is proportional to the first width.

According to another example of the second aspect, the CSD is determined experimentally prior to performing the computer-implemented method, and the CSD is used as an input variable for the computer-implemented method.

According to another example of the second aspect, the CSD is determined according to a method of the first aspect.

According to another example of the second aspect, the computer-implemented method is based on a finite element method, FEM.

## BRIEF DESCRIPTION OF THE DRAWINGS

Fig. 1 illustrates a tire in the contact region, as segmented for a wear simulation, as well as the division of the contact patch of the tire in a sticking and sliding portion.

Fig. 2 illustrates a sliding surface amongst which a sample is slidden in small intervals, in order to determine the CSD according to the present invention.

Fig. 3 illustrates a graph showing the development of a friction coefficient over sliding time for sliding over small intervals as depicted in Fig. 2.

Fig. 4 illustrates a sliding surface amongst which a sample is slidden in large intervals, in order to determine the CSD according to the present invention.

Fig. 5 illustrates a graph showing the development of a friction coefficient over sliding time for sliding over large intervals as depicted in Fig. 4.

Fig. 6 illustrates a flow chart of a method for determining a CSD for a sample, according to the present invention.

Fig. 7 illustrates a graph showing a wear rate m(w) for different withs $w_i$, including the knee characterizing the CSD.

Fig. 8 illustrates a graph showing wear rate m(w) for different withs $w_i$, including the knee characterizing the CSD and for different rubber compounds A, B, C and D.

Fig. 9 illustrates a graph showing wear rate m(w) for different withs $w_i$, including the knee characterizing the CSD and for different sample shapes from the same rubber compound.

Fig. 10 illustrates a flow chart of a computer-implemented method for estimating the wear of a tire, according to the present invention.

Fig. 11 illustrates a finite element mesh as may be used in a computer-implemented method according to the present invention.

Fig. 12 illustrates a graph comparing the accuracy of standard simulations without consideration of the CSD and the accuracy of simulations which consider CSD.

## DETAILED DESCRIPTION

The present invention provides a method for determining a CSD for a sample and a computer-implemented method for estimating the wear of a tire.

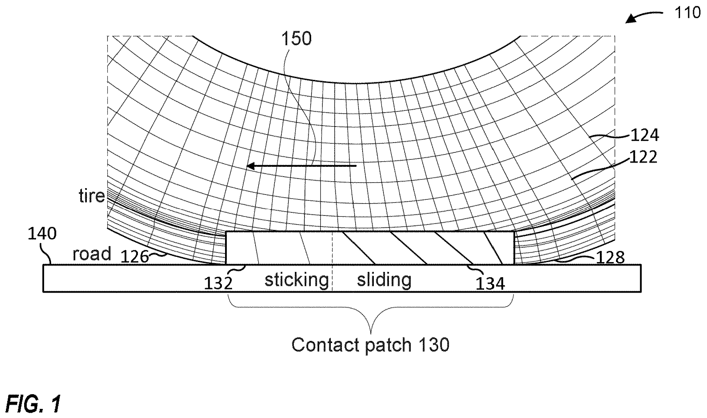

Fig. 1 illustrates a tire in the contact region, as segmented for a wear simulation based on a Finite Element Method (FEM), as well as the division of the contact patch of the tire in a sticking and sliding portion. In this embodiment, the tire is used as the sample, and the method is explained in the context for estimating the wear of a tire. It should, however, be understood, that the functionality described in this context may also be used for other samples, such as predicting the wear of shoe soles, rubber seals, especially rubber seals which are part of a rotary system, or any other rubber compound.

The tire 110 is segmented into multiple finite elements (= segments), for example segments 122 and 124. At contact patch 130, the tire 110 is in contact with the road surface 140. As the tire 110 travels in the indicated travelling direction 150, it begins rolling on the road surface 140, such that after a time interval, the segment 126 will encounter the road surface 140 and will thus become part of the contact patch 130. Similarly, segment 128 which at the beginning is in contact with the road surface 140, will be lifted from the road and will thus move out of the contact patch 130. Consequently, during rolling of the tire 110, a tire segment will first encounter the road surface 140, will then move through the contact patch 130 and will in the end be lifted from the road surface 140 and leave contact patch 130.

When encountering the road surface 140, i.e., in the frontmost portion of the contact patch 130, a segment does not undergo substantial movement with respect to the road surface 140. Only as the segment approaches the rearmost end of the contact patch 130, a segment will start undergoing some movement with respect to the road surface 140, i.e., the segment will start to slide over the road surface.

Thus, the contact patch can be divided into a sticking region 132 in which segments do not undergo movement with respect to the road surface, and a sliding region 134, in which segments do undergo movement with respect to the road surface.

Generally, when the tire is not in movement, there is no movement with respect to the road surface, and therefore the complete contact patch consists of one sticking region 132 and no sliding region 134. As the tire starts moving, a sliding region 134 begins to form at the contact patch and the sticking region 132 thus becomes smaller. Consequently, with increasing rolling speed, the sliding region 134 becomes larger and the sticking region 132 becomes smaller. The width of the sticking region 132 may then be characterized as the Critical Slip Distance (CSD), i.e., the distance starting from which the adhesive part of the sliding phenomenon becomes irrelevant to the computation of cumulative wear energy per unit of distance, and so after that threshold the sliding phenomenon shows a constant trend vs. sliding distance.

The CSD can be used as a new fundamental input for a phenomenological model which serves as a basis for tire wear simulations to increase the reliability level of the prediction provided by the simulations.

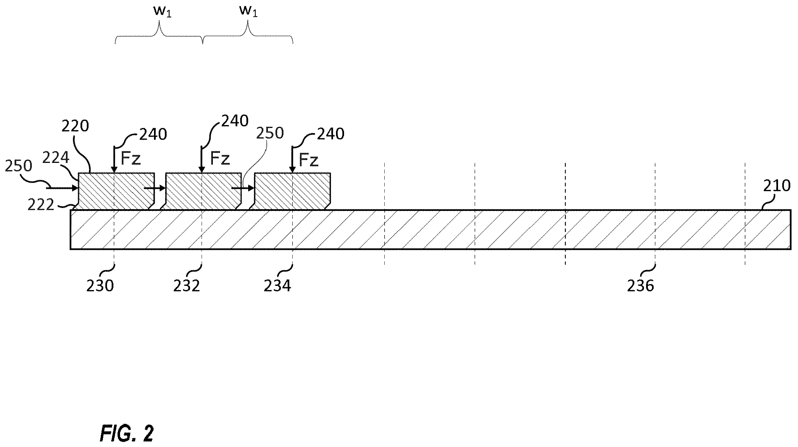

Fig. 2 illustrates a sliding surface 210 amongst which a sample is slidden in small intervals, in order to determine the CSD according to the present invention.

Fig. 2 depicts a sliding surface 210. A sample 220 is provided on the sliding surface 210, e.g., in a starting position 230. In some aspects, the sample 220 may be a rubber sample. A force $F_z$ 240 towards the sliding surface is provided to the sample. For example, the force can be provided by applying a load to the sample, such that a gravitational force $F_z$ presses the sample 220 to the sliding surface 210. In other examples, the force may be applied hydraulically, pneumatically or mechanically by means of a motor, for example an electric motor. In yet other examples, the force may be generated by the sample's own weight, such that not extrinsic force needs to be applied.

Now, a horizontal force $F_x$ 250 may be provided to the sample, such that the sample 220 is moved along the sliding surface 210 over a first interval of small width $w_1$, until it reaches the second position 232. In the example depicted herein, the small width $w_1$ is 4 mm. However, other widths can be used. As illustrated in Fig. 2, the lower portion 222 of the sample 220 undergoes deformation due to the horizontal force 250 as well as the friction of the sample 220 on the sliding surface 210, while at the same time the upper portion 224 of sample 220 remains substantially undeformed. The deformation increases as long as the static friction force exceeds the sliding friction force. At the point of maximum deformation, the sliding friction force starts exceeding the static friction force, such that the sample 220 starts sliding along the sliding surface 210. The sample 220 is then slidden until it reaches the second position 232. Here, the sample may be stopped, the force 240 may be lifted to resolve the deformation of the sample and the force 240 may then be reapplied before the same procedure may be repeated, and the sample 220 may be slidden over a second interval of equal width $w_1$, until it reaches a third position 234. This procedure may be repeated multiple times until the sample 220 reaches an end position 236.

In the above example, the sample may be slidden over the total sliding surface in multiple intervals. In some examples, the sample may only be slidden over a portion of the sliding surface in one or more steps. In some examples, the sample may be slidden over the same portion of the sliding surface multiple times.

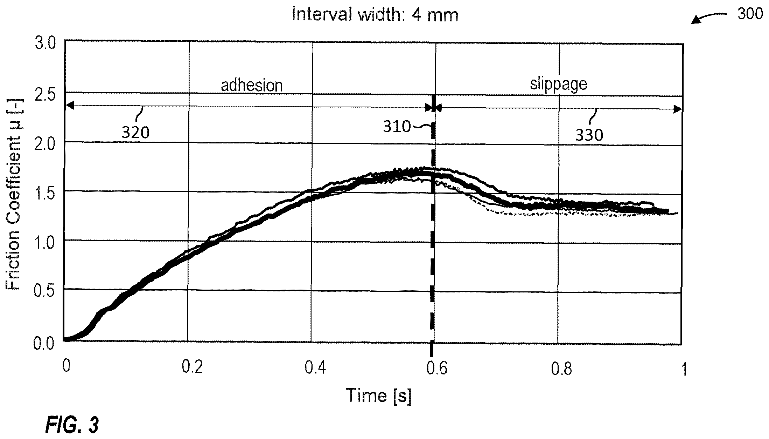

Fig. 3 illustrates a graph 300 showing the development of a friction coefficient over sliding time for sliding over small intervals $w_1$ as depicted in Fig. 2.

The abscissa of graph 300 shows the sliding time from one position to the next over an interval $w_1$, as depicted in Fig. 2. The ordinate of graph 300 shows the respective friction coefficient $\mu$ for the respective times. The friction coefficient may be defined as the ratio between a horizontal force $F_x$ and a vertical force $F_z$, such that $\mu = F_x/F_z$. Each line in the graph shows the development of the friction for one of the intervals having width $w_1$. The lines show increasing friction over time until a break-off-point 310. Beyond the break-off-point 310, the friction coefficient drops slightly and then shows substantially constant behavior. Thus, before the break-off-point, there is an adhesion area 320, at which the adhesion contribution exceeds the friction contribution, and a slippage area 330, at which the friction contribution exceeds the adhesion contribution.

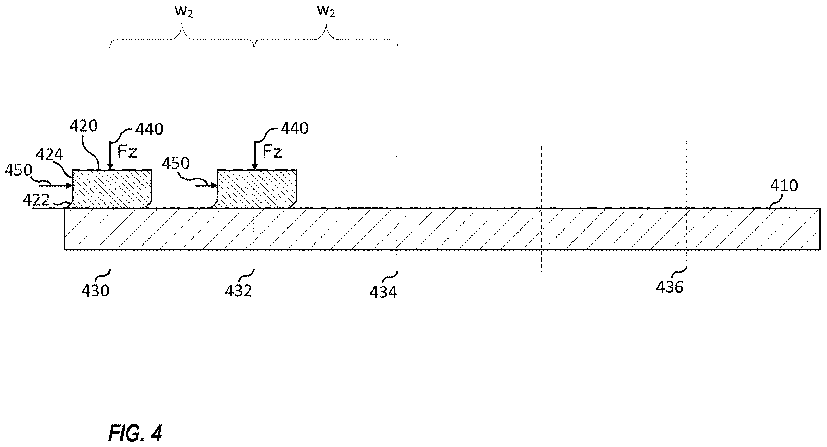

Fig. 4 illustrates a sliding surface 410 amongst which a sample is slidden in large intervals, in order to determine the CSD according to the present invention.

Fig. 4 depicts sliding surface 410. A sample 420 is provided on the sliding surface 410, e.g., in a starting position 430. In some aspects, the sample 420 may be a rubber sample. A force $F_z$ 440 towards the sliding surface 410 is provided to the sample 420. For example, the force 440 can be provided by applying a load to the sample 420, such that a gravitational force $F_z$ presses the sample 420 to the sliding surface 410.

Now, again, a horizontal force $F_x$ 450 may be provided to the sample, such that the sample 420 is slidden along the sliding surface 410 over a first interval of larger width $w_2$, until it reaches the second position 432. In the example depicted herein, the larger width $w_2$ is 24 mm. However, other widths can also be used. As illustrated in Fig. 4, the lower portion 422 of the sample 420 undergoes deformation due to the horizontal force 450 as well as the friction of the sample 420 on the sliding surface 410, while at the same time the upper portion 424 of sample 420 remains substantially undeformed. The deformation increases as long as the static friction force exceeds the sliding friction force. At the point of maximum deformation, the sliding friction force starts exceeding the static friction force, such that the sample 420 starts sliding. The sample 420 is then slidden until it reaches the second position 432. Here, the sample may be stopped, the force 440 may be lifted to resolve the deformation of the sample and the force 440 may then then reapplied before the same procedure may be repeated, and the sample 420 may be slidden over a second interval of equal width $w_2$, until it reaches a third position 434. This may be repeated multiple times until the sample 420 reaches the end position 436.

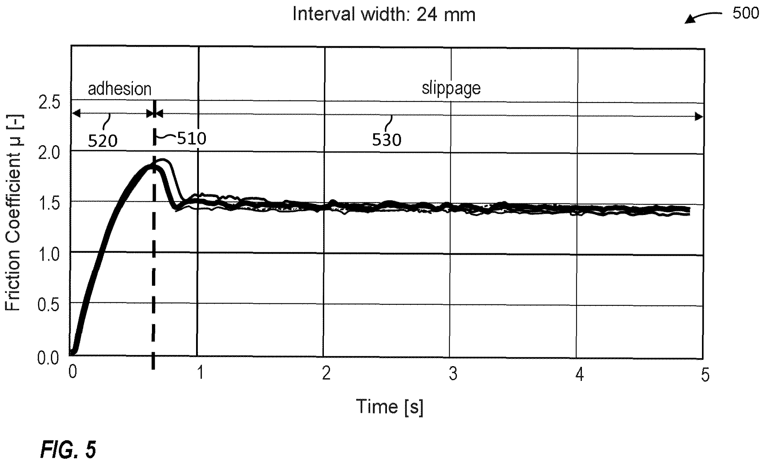

Fig. 5 illustrates a graph 500 showing the development of a friction coefficient over sliding time for sliding over large intervals as depicted in Fig. 4.

Similar as in Fig. 3, in Fig. 5 each line in the graph 500 shows the development of the friction for one of the intervals having width $w_1$. The lines show increasing friction over time until a break-off-point 510. Beyond the break-off-point 510, the friction coefficient drops slightly and shows substantially constant behavior. Thus, before the break-off-point 510, there is an adhesion area 520, at which the adhesion contribution exceeds the friction contribution, and a slippage are 530, at which the friction contribution exceeds the adhesion contribution.

As compared to graph 300 of Fig. 3, graph 500 shows a break-off-point at approximately the same time as graph 300. However, as the sample 420 in the case illustrated in Fig. 4 moves much longer than in the case illustrated in Fig. 2, the slippage area 530 of Fig. 5 is extensive as compared to the slippage area 330 of Fig. 3. Consequently, this means that the ratio of adhesion vs. slippage for a sample 220/420 is a function of the sliding distance: A longer sliding distance will lead to a lower contribution of the adhesion area 320/520 compared to the contribution of the slippage area 330/530.

Since abrasion occurs only when there is a relative movement between the bodies in contact (slippage), this means that the wear rate (= total mass loss per unit of sliding distance) is as well a function of the interval width: for shorter interval width, the wear rate is lower due the larger contribution of the adhesive part; while, by increasing the interval width, the adhesive part becomes less important and the wear rate increases up to a substantially constant value. From this phenomenon, the CSD can be defined as the interval width beyond which the adhesion part becomes negligible, i.e., when the wear rate becomes constant. Consequently, the CSD can be determined by a method as described in the following.

In the above example, the sample may be slidden over the total sliding surface in multiple intervals. In some examples, the sample may only be slidden over a portion of the sliding surface in one or more steps. In some examples, the sample may be slidden over the same portion of the sliding surface multiple times.

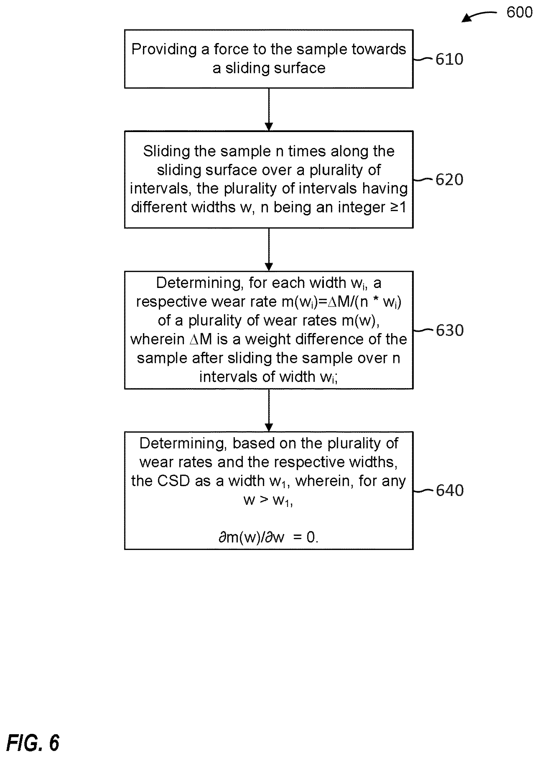

Fig. 6 illustrates a flow chart of a method 600 for determining a CSD for a sample, according to the present invention.

At 610, a force is provided to a sample towards a sliding surface. In some aspects, the sample may be a rubber sample. For example, the force can be provided by applying a load to the sample, such that a gravitational force $F_z$ presses the sample towards a sliding surface. In other examples, the force may be applied hydraulically, pneumatically or mechanically by means of a motor, for example an electric motor, or in some other way. In some examples, the force may be applied solely by the sample's own gravitational force, without any extrinsic additional force. The force towards the sliding surface ensures that there is adhesion between the sample and the sliding surface. In some examples, the force may be varied over the experiment, in other example the force may be kept constant over the course of the experiment. Since the vertical force also generates a contact pressure proportional to the force, the magnitude of the force may be expressed by the magnitude of the contact pressure generated by the vertical force.

At 620, the sample is slidden n times along the sliding surface along a plurality of intervals, the plurality of intervals having different widths w, n being an integer greater than or equal to 1. As discussed elsewhere herein, the sample may be slidden over the sliding surface in intervals of a small width $w_1$ (as discussed with reference to Figs. 2 and 3) and then the sample may be slidden over the sliding surface in intervals of larger width $w_2$ (as discussed with reference to Figs. 4 and 5). For each interval width, the sample may be slidden in n steps over a total sliding distance, the total sliding distance for the i-th interval width thus being ($n * w_i$).

In some examples, the sample may be slidden over the total sliding surface in multiple intervals. In some examples, the sample may only be slidden over a portion of the sliding surface in one or more steps. In some examples, the sample may be slidden over the same portion of the sliding surface multiple times.

In a preferred embodiment, the total sliding distance (n * $w_i$) may be constant for all interval widths $w_i$. For example, the sample may be slidden n=6 times along intervals with width $w_1$ = 4 mm, then n=4 times along intervals with width $w_2$ = 6 mm, then n=3 times along intervals with $w_3$ = 8 mm, etc., such that (n * $w_i$) is constant for all $w_i$ at (n * $w_i$) = 24 mm. This setup may increase comparability of the results by providing similar sliding conditions.

In some aspects, the widths $w_i$ of the plurality of intervals may be integer dividers of a total length of the sliding surface.

In some aspects, the method 600 may further comprise sliding the sample over multiple intervals of each width $w_i$, obtaining the weight difference $\Delta M$ by weighing the sample before and after sliding over n intervals of width $w_i$, and determining the wear rate based on the weight difference $\Delta M$ and a total slidden distance.

In some aspects, the force may be lifted after sliding the sample along one of the intervals and the force may be reapplied before sliding the sample along the subsequent interval. This allows for the deformation of the sample to resolve between subsequent sliding steps.

In some aspects, the sample may be slidden along the sliding surface at substantially constant speed. This allows for increased comparability of the results. Furthermore, this allows performing a speed series to examine the influence of speed on the CSD.

In some aspects, the method 600 may further comprise identifying a first distance along which a static friction force exceeds a sliding friction force, identifying a second distance, along which the sliding friction force exceeds the static friction force, and determining the CSD further based on the first distance.

At 630, a respective wear rate is determined for each interval width. The wear rate for the i-th interval width is defined as m($w_i$) = $\Delta M$/(n * $w_i$), with $\Delta M$ being the weight difference of the sample after sliding the sample n times over interval width $w_i$ as compared to before the sliding.

In the preferred embodiment of para. [0059], with (n * $w_i$) = const., the wear rate m(w) is directly proportional to the (absolute) weight difference $\Delta M$.

In some aspects, the method 600 may further comprise providing a sliding surface having a total length, sliding the sample over the sliding surface multiple times in steps of each of the plurality of widths w, and measuring the plurality of wear rates for each one of the plurality of widths w.

At 640, the CSD is determined based on the plurality of wear rates m(w) and the respective width. In detail, the CSD is determined as a width $w_o$, wherein for any w greater than $w_o$:

$$\frac{\partial m(w)}{\partial w} = 0.$$

In other words, the CSD is determined as the interval width, above which the wear rate remains constant with increasing interval width.

In some aspects the CSD may be determined based on any one of: a geometry of the sample, a material property of the sample, a texture of the sliding surface, an amount of the force, an amount of the sliding speed, and an amount of the acceleration to reach the set sliding speed, and a temperature of the sample. This allows for a more precise prediction of tire wear by using the respectively determined CSD as an input for a tire wear simulation model.

In some examples, different rubber samples may be used to determine different CSD values. In some other examples, different substrates may be used to determine a substrate dependent CSD. In yet some other examples, different sliding speeds may be used to determine a speed dependency of the CSD. Preferably, sliding speeds between 1 mm/s and 5000 mm/s may be used. More preferably, sliding speeds between 5 mm/s and 1000 mm/s may be used. Most preferably, a sliding speed of about 5 mm/s may be used.

In some examples, different contact pressures may be used to determine a load dependency of the CSD. As indicated above, the magnitude of the contact pressure is proportional to the magnitude of the vertical force. Preferably, contact pressures between 1 bar and 20 bar may be used. More preferably, contact pressures between 2 bar and 4 bar may be used. Most preferably, a contact pressure of about 3 bar may be used.

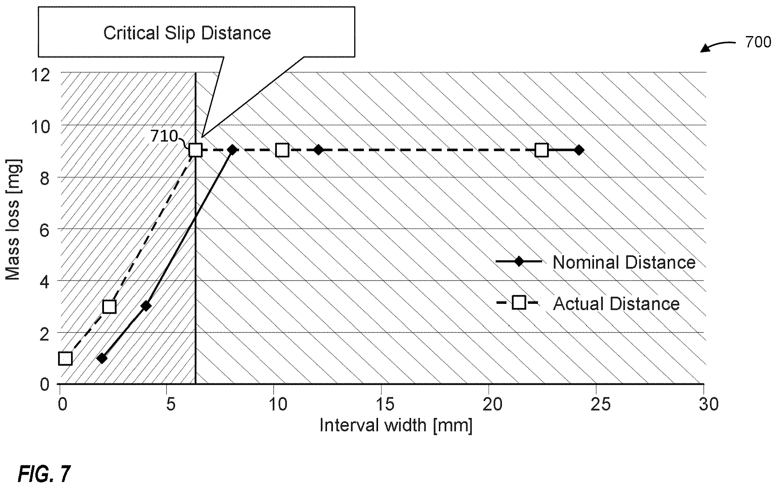

Fig. 7 illustrates a graph 700 showing a wear rate m(w) for different withs $w_i$, including a knee characterizing the CSD.

The abscissa of the graph 700 illustrated in Fig. 7 shows the different interval widths in units of [mm]. The respective ordinate shows weight loss in units of [mg] over a constant sliding distance of (n * $w_i$). The graph shows two lines, both of which are equal except for a shift in horizontal direction. The first graph, denoted as "Nominal distance", indicates the interval width corresponding to the movement of the upper portion 224/424 of the sample 220/420. The second graph, denoted as "Actual distance", is shifted by the maximum deformation of the sample in horizontal direction. Thus, the second graph corresponds to the movement of the contact surface on the lower portion 222/422 of the sample 220/420 over the sliding surface. The CSD is determined by the "Actual Distance", i.e., by the movement of the contact surface of the sample.

It can be seen from graph 700 that the lines show bi-linear behavior with a well-defined knee 710 at a certain value of the interval width, and above that knee, the mass loss is substantially constant with increasing interval width. Thus, the width at which the knee 710 is located corresponds to the CSD.

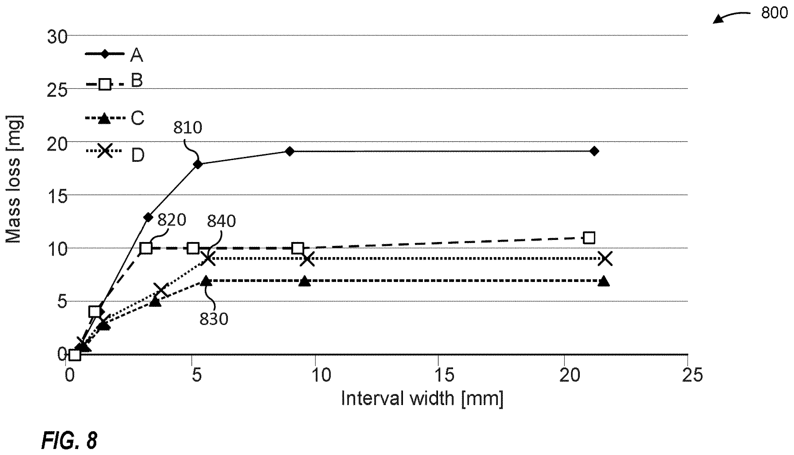

Fig. 8 illustrates a graph 800 showing wear rate m(w) for different withs $w_i$, including the knee characterizing the CSD and for different rubber compounds A, B, C and D.

The abscissa of the graph 800 illustrated in Fig. 8 shows the different interval widths in units of [mm]. The respective ordinate shows weight loss in units of [mg] over a constant sliding distance of $(n * w_i)$. The graph 800 includes four lines, which are denoted A, B, C and D respectively. Each line represents measurement with a different rubber compound having different physical properties. The respective measurements have been corresponding to the methods described in Figs. 2 to 6. The different compounds differ from one another in terms of stiffness, friction and abrasion features and have been tested by keeping the same sample geometry (rounded blocks). It can be seen that the initial slope of the curves differs with different materials and that different CSDs can thus be determined for different rubber compound. For rubber component A, knee 810 corresponds to the CSD at approximately 5 mm. For rubber component B, knee 820 corresponds to the CSD at approximately 3 mm. For rubber component C, knee 830 corresponds to the CSD at approximately 5 mm. For rubber component D, knee 840 corresponds to the CSD at approximately 5 mm.

Accordingly, different wear performance can be obtained. Generally, a rubber compound showing longer CSD will result in lower wear rates. At the same time, the level of saturation influences the overall wear of the tire as it corresponds to the wear rate that occurs beyond the respective CSD. Thus, rubber compound A, while having the largest CSD, also has the largest wear rate beyond the CSD.

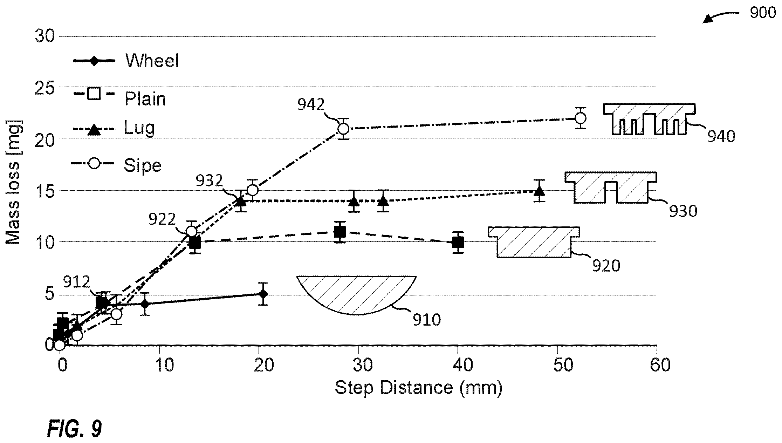

Fig. 9 illustrates a graph 900 showing wear rate m(w) for different withs $w_i$, including the knee characterizing the CSD and for different sample shapes from the same rubber compound.

The abscissa of the graph 900 illustrated in Fig. 9 shows the different interval widths in units of [mm]. The respective ordinate shows weight loss in units of [mg] over a constant sliding distance of $(n * w_i)$. The graph 900 shows four lines, each line corresponding to a different sample shape, while all shapes are formed from the same rubber compound. The respective measurements with the differently shaped samples have been corresponding to the methods described in Figs. 2 to 6. The line for the shape of a wheel 910 shows a knee 912 corresponding to a CSD of approximately 5 mm. The line for the shape of a plain 920 shows a knee 922 corresponding to a CSD of approximately 12 mm. The line for the shape of a lug 930 shows a knee 932 corresponding to a CSD of approximately 20 mm. The line for the shape of a sipe 940 shows a knee 942 corresponding to a CSD of approximately 30 mm.

Accordingly, different wear performance can be obtained. Generally, a sample shape showing longer CSD will result in lower wear rates. At the same time, the level of saturation influences the overall wear of the tire as it corresponds to the wear rate that occurs beyond the respective CSD. Thus, the sipe shape 940, while having the largest CSD, also has the largest wear rate beyond the CSD.

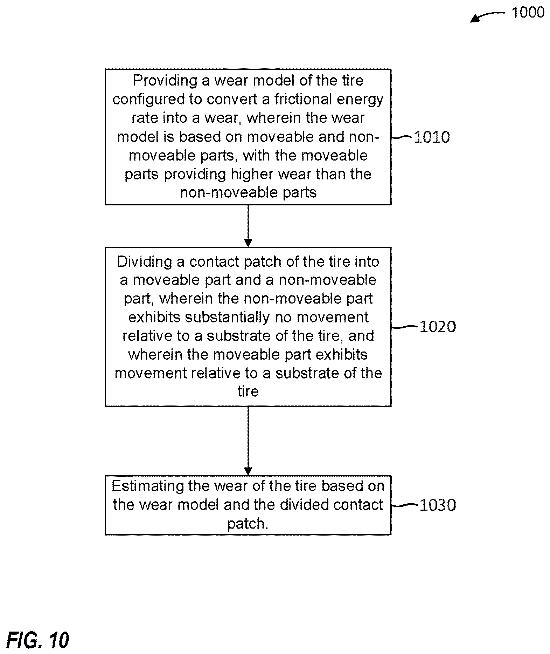

Fig. 10 illustrates a flow chart 1000 of a computer-implemented method for estimating the wear of a tire, according to the present invention.

At 1010, a wear model is provided. The wear model may be configured to convert a frictional energy rate into a wear. The wear model may be based on moveable and non-moveable parts. The moveable parts may provide higher wear then the non-moveable parts.

In some examples, the non-moveable parts provide substantially no wear. This example provides for increased simplicity of the computer-implemented method and thus allows for saving of computational resources while at the same time providing an accurate representation of the realistic physical conditions.

At 1020, a contact patch of the tire is divided into a moveable part and a non-moveable part. The non-moveable part therein exhibits substantially no movement relative to a substrate of the tire. The moveable part in contrast may exhibit movement relative to a substrate of the tire.

The non-moveable part has a first width, and a CSD is proportional to the first width. This allows for increased accuracy of the wear prediction provided by the computer-implemented method.

In some examples, the CSD may be determined prior to performing the computer-implemented method. In some examples, the CSD may be used as an input variable for the computer-implemented method.

The CSD is determined according to the method as described in Figs. 2 to 6.

In some examples, multiple CSD values may be used as input variables for the computer model. For example, different CSD values for different amounts of velocities may be used as input variables. In other examples, different CSD values for different amounts of accelerations, different amounts of vertical force or different temperature of the sample may be used.

Using the CSD as an input value for the computer-implemented method increases the quality of prediction for the tire wear. This is achieved by providing a more accurate model of how tire wear occurs in reality.

At 1030, the wear of the tire is estimated based on the wear model and the divided contact patch.

In the following, an exemplary algorithm for estimating the wear of a tire is described. The algorithm may be based on the Finite Element Method (FEM), which may include geometrical and/or material data for a simulated tire. To conduct the method, the simulated tire may be discretized in multiple finite elements as described with regards to Fig. 1. Each finite element may be characterized by a set of nodes, which represents the degrees of freedom in the model.

The following experimental data may be used as input parameters for the algorithm:

• A friction map as a function of pressure, velocity and temperature

- Critical Slip Distance (CSD)

- Abradability parameters for the rubber material

The following quantities may be required as output from the simulation for each node:

- Pressure

- Velocity

- Slip

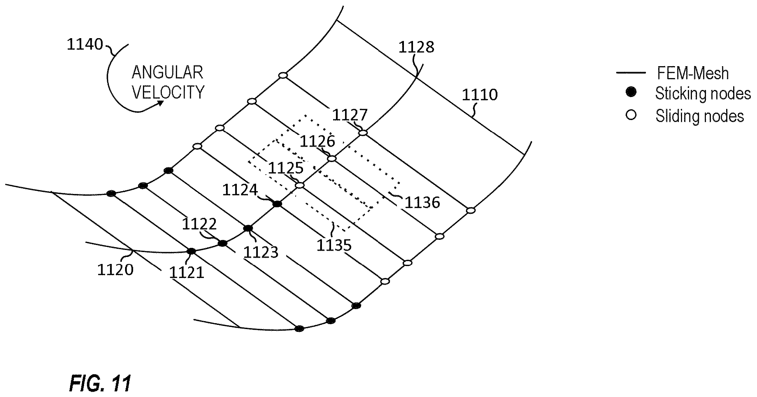

The finite elements may be represented by a finite element mesh 1110 as illustrated in Fig. 11. The finite element mesh 1110 comprises multiple contact elements which are represented by quadrilaterals. In the present example, at a given time $t_n$, node 1120 and 1128 are not in contact with the road surface. Nodes 1121 to 1124 are in contact with the road surface and do not undergo movement relative to the road surface, i.e., they stick to the road surface. Nodes 1125, 1126 and 1127 are also in contact with the road surface and do undergo movement relative to the road surface, i.e., they slip over the road surface. Consequently, they show nodal pressure p (p>0) and slip ($\gamma$>0).

Each node 1121 to 1127 in contact with the road surface has a corresponding nodal area. Exemplary shown in Fig. 11 are nodal area 1135 for node 1125 and nodal area 1136 for node 1126. However, it is to be understood that all other nodes in contact with the road also have a corresponding nodal area $A_n$.

From the nodal data, a corresponding frictional stress $\tau$ can be defined. For the i-th node, the frictional stress $\tau_i$ may be defined as

$$\tau_i = \mu_i(p_i, \dot{\gamma}_i) * p_i,$$

with $\mu_i(p_i, \dot{\gamma}_i)$ being the respective friction coefficient, dependent on the nodal pressure $p$ and slip velocity $\dot{\gamma}$. Then, the frictional energy rate (friction energy per unit of time) can be defined by

$$\dot{E}_{f,i} = \tau_i \cdot \dot{\gamma}_i \cdot A_i,$$

$A_i$ being the nodal area of the i-th node.

For the nodes in sticking condition, $\dot{\gamma} = 0$, such that they do not contribute to the frictional energy rate. However, this formula is independent of the nodal slip $\gamma$ and thus no contribution of the critical slip distance is included therein. Thus, according to the above formula, the result will be characterized by an unrealistically high wear rate.

In a transient framework, the nodal slip $\gamma$ for each node may be a direct output of the simulation framework and can be used to determine which part of the bi-linear model applies for a respective node. In the following, the CSD may also be regarded as $\gamma_{cr}$. This way, the frictional energy rate may be reduced by a scaling factor $f_i$, resulting in the wear energy rate $\dot{E}_w$ as

$$\dot{E}_{w,i} = f_i(\gamma_i) * \dot{E}_{f,i},$$

with

$$f_i(\gamma_i) = \frac{\gamma_i}{\gamma_{cr}}, \text{ if } \gamma_i < \gamma_{cr},$$

or

$$f_i(\gamma_i) = 1,$$

otherwise.

From the wear energy rate, the mass loss rate $\dot{q}$ per node can be calculated as

$$\dot{q}_i = k * (\dot{E}_{w,i})^n.$$

Therein, $k$ and $n$ are material-specific abradability parameters, which have been discussed above as input parameters for the algorithm. From the mass loss rate, the nodal mass loss $q$ may be calculated as

$$q_i = \dot{q}_i * t_r,$$

$t_r$ being the rolling time. The rolling time is the difference between the current time of analysis $t_n$ and the previous time step $t_{n-1}$.

To generalize this for the total width of the tire, it may be assumed that the total abrasion is the sum of all mass loss computed at the nodes.

Consequently, the energy rate to be used for the wear phenomenon may be obtained by means of a factor $f_i(\gamma)$ to be computed based on the nodal slip and the critical slip distance obtained from experiments.

Finally, the wear energy rate may be applied to the wear model in order to compute a mass loss rate (or volume loss rate, depending on the units used) to be applied at the node. I.e., the output of the framework allows to evaluate the amount of mass which is abraded per unit time at every node in contact. This data can be further used, amongst others, for the estimation of milage, evaluation of irregular wear in the tread, comparison of performance between geometries, materials and rolling conditions.

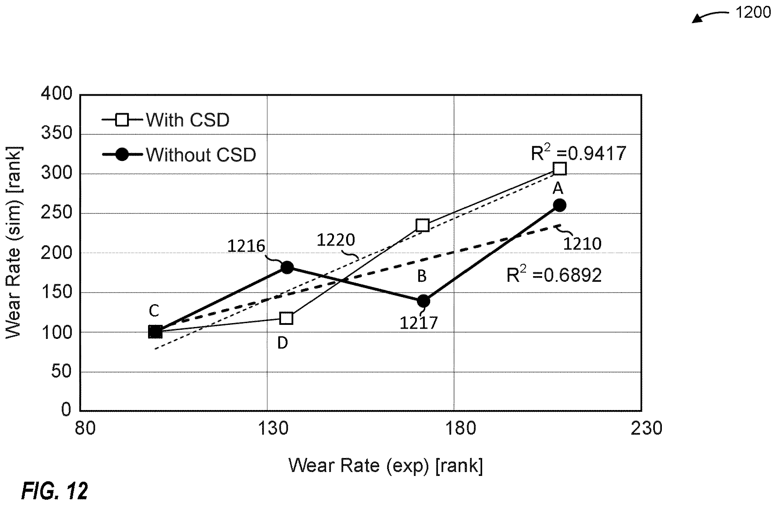

Fig. 12 illustrates a graph 1200, comparing the accuracy of standard simulations without consideration of the CSD and the accuracy of simulations which consider CSD.

The ordinate of graph 1200 shows the rank of wear rate performance for the different rubber compounds A, B, C and D, as discussed with reference to Fig. 8. The wear rate performances in graph 1200 are given in units of [%] relative to compound C, such that compound C corresponds to the value of 100%. The abscissa of graph 1200 shows the wear rate performance obtained in prior abrasion tests in tires performed by the manufacturer, also in units of [%] relative to compound C. Data shown by circles represent the relation between the experimental ranking and the simulation without the use of CSD. The dotted line 1210 indicates a square of the Pearson correlation coefficient $R^2=0.6892$. It can be seen that there is a considerable discrepancy between the data points 1216 and 1217, which correspond to compounds B and D, and the respective simulation data, as well as a low quality of the correlation.

Data shown by squares represents the result of the simulation with consideration of the CSD. The dotted line 1220 indicates a square of the Pearson correlation coefficient $R^2=0.9417$. As can be seen, when considering the CSD in the simulation, an increase in experimental wear rate performance also leads to an increase in simulated wear rate performance. As can further be seen from graph 1200, the discrepancy between experimental data and simulation data is considerably lower, with a higher quality of correlation, when the CSD is considered in the simulation.

## Claims

1. A method for determining a critical slip distance, CSD, for a sample, the method comprising:

   providing a force to the sample towards a sliding surface;
   sliding the sample n times along the sliding surface over a plurality of intervals,
   the plurality of intervals having different widths w, n being an integer $\geq 1$;
   determining, for each width $w_i$, a respective wear rate $m(w_i)=\Delta M/(n * w_i)$ of a plurality of wear rates $m(w)$, wherein $\Delta M$ is a weight difference of the sample after sliding the sample over n intervals of width $w_i$ as compared to before the sliding; and
   determining, based on the plurality of wear rates and the respective widths, the CSD as a width $w_o$, wherein, for any $w > w_o$,

$$\frac{\partial m(w)}{\partial w} = 0.$$

2. The method of claim 1, wherein the widths $w_i$ of the plurality of intervals are integer dividers of a total length of the sliding surface.

3. The method of any one of the preceding claims, further comprising:

   sliding the sample over multiple intervals of each width $w_i$;
   obtaining the weight difference $\Delta M$ by weighing the sample before and after sliding over n intervals of width $w_i$; and
   determining the wear rate based on the weight difference $\Delta M$ and a total slidden distance.

4. The method of claim 3, wherein the total slidden distance is equal for each one of the widths $w_i$.

5. The method of any one of claims 3 or 4,

   wherein the force is lifted after sliding the sample along each one of the intervals; and
   the force is reapplied before sliding the sample along the subsequent interval.

6. The method of any one of the preceding claims, wherein the sample is slidden along the sliding surface at a substantially constant speed.

7. The method of any one of the preceding claims, further comprising:

   identifying a first distance, along which a static friction force exceeds a sliding friction force;
   identifying a second distance, along which the sliding friction force exceeds the static friction force; and
   determining the CSD further based on the first distance.

8. The method of any one of the preceding claims, further comprising:

   providing a sliding surface having a total length;
   sliding the sample over the sliding surface multiple times in steps of each of the plurality of widths w; and
   measuring the plurality of wear rates for each one of the plurality of widths w.

9. The method of any one of the preceding claims, wherein the CSD is measured based on any one of

   a geometry of the sample,
   a material property of the sample,
   a texture of the sliding surface,
   an amount of the force,
   an amount of the sliding speed,
   an amount of the acceleration to reach the set sliding speed, and
   a temperature of the sample.

10. A computer-implemented method for estimating the wear of a tire, comprising:

> providing a wear model of the tire configured to convert a frictional energy rate into a wear, wherein the wear model is based on moveable and non-moveable parts, with the moveable parts providing higher wear than the non-moveable parts;
> dividing a contact patch of the tire into a moveable region and a non-moveable region, wherein the non-moveable region exhibits substantially no movement relative to a substrate of the tire, wherein the non-moveable region has a first width, wherein the first width is a critical slip distance, CSD, wherein the CSD is determined according to the method of any one of claims 1 to 9, and
> wherein the moveable region exhibits movement relative to a substrate of the tire;
> estimating the wear of the tire based on the wear model and the divided contact patch.

11. The method of claim 10, wherein the non-moveable region provides substantially no wear.

12. The method of claim 10,

> wherein the CSD is determined experimentally prior to performing the computer-implemented method, and
> wherein the CSD is used as an input variable for the computer-implemented method.

13. The method of any one of claims 10 to 12, wherein the computer-implemented method is based on a finite element method, FEM.

**Patentansprüche**

1. Verfahren zum Bestimmen eines kritischen Schlupfabstands, CSD, für eine Probe, das Verfahren umfassend:

> Bereitstellen einer Kraft auf die Probe in Richtung einer Gleitoberfläche;
> n-maliges Gleitenlassen der Probe entlang der Gleitoberfläche über eine Vielzahl von Intervallen,
> wobei die Vielzahl von Intervallen unterschiedliche Breiten w aufweist, wobei n eine ganze Zahl $\geq 1$ ist;
> Bestimmen, für jede Breite $w_i$, einer jeweiligen Verschleißrate $m(w_i) = \Delta M / (n * w_i)$ einer Vielzahl von Verschleißraten $m(w)$, wobei $\Delta M$ eine Gewichtsdifferenz der Probe nach dem Gleitenlassen der Probe über n Intervalle von Breite $w_i$ verglichen mit vor dem Gleitenlassen ist; und

> Bestimmen, basierend auf der Vielzahl von Verschleißraten und der jeweiligen Breiten, des CSD als eine Breite $w_o$, wobei, für eine beliebige $w > w_o$,

$$\frac{\partial m(w)}{\partial w} = 0.$$

2. Verfahren nach Anspruch 1, wobei die Breiten $w_i$ der Vielzahl von Intervallen ganzzahlige Teiler einer Gesamtlänge der Gleitoberfläche sind.

3. Verfahren nach einem der vorstehenden Ansprüche, ferner umfassend:

> Gleitenlassen der Probe über mehrere Intervalle jeder Breite $w_i$;
> Erhalten der Gewichtsdifferenz $\Delta M$ durch Wiegen der Probe vor und nach dem Gleitenlassen über n Intervalle von Breite $w_i$; und
> Bestimmen der Verschleißrate basierend auf der Gewichtsdifferenz $\Delta M$ und eines Gesamtgleitabstands.

4. Verfahren nach Anspruch 3, wobei der Gesamtgleitabstand für jede eine der Breiten $w_i$ gleich ist.

5. Verfahren nach einem der Ansprüche 3 oder 4,

> wobei die Kraft weggenommen wird, nachdem die Probe entlang jedes einen der Intervalle gleitengelassen wurde; und
> die Kraft erneut aufgebracht wird, bevor die Probe entlang des nächsten Intervalls gleitengelassen wird.

6. Verfahren nach einem der vorstehenden Ansprüche, wobei die Probe mit einer im Wesentlichen konstanten Geschwindigkeit entlang der Gleitoberfläche gleitengelassen wird.

7. Verfahren nach einem der vorstehenden Ansprüche, ferner umfassend:

> Identifizieren eines ersten Abstands, entlang dem eine Haftreibkraft eine Gleitreibkraft überschreitet;
> Identifizieren eines zweiten Abstands, entlang dem die Gleitreibkraft die Haftreibkraft überschreitet; und
> Bestimmen des CSD ferner basierend auf dem ersten Abstand.

8. Verfahren nach einem der vorstehenden Ansprüche, ferner umfassend:

> Bereitstellen einer Gleitoberfläche, die eine Gesamtlänge aufweist;

mehrmaliges Gleitenlassen der Probe über die Gleitoberfläche in Schritten jeder der Vielzahl von Breiten w; und

Messen der Vielzahl von Verschleißraten für jede eine der Vielzahl von Breiten w.

9. Verfahren nach einem der vorstehenden Ansprüche, wobei der CSD basierend auf einem beliebigen gemessen wird von

einer Geometrie der Probe,
einer Materialeigenschaft der Probe,
einer Textur der Gleitoberfläche,
einem Betrag der Kraft,
einem Betrag der Gleitgeschwindigkeit,
einem Betrag der Beschleunigung, um die eingestellte Gleitgeschwindigkeit zu erreichen, und
einer Temperatur der Probe.

10. Computerimplementiertes Verfahren zum Schätzen des Verschleißes eines Reifens, umfassend:

Bereitstellen eines Verschleißmodells des Reifens, das konfiguriert ist, um eine Reibenergierate in einen Verschleiß umzuwandeln,
wobei das Verschleißmodell auf bewegbaren und nicht bewegbaren Teilen basiert, wobei die bewegbaren Teile höheren Verschleiß als die nicht bewegbaren Teile bereitstellen;
Teilen einer Aufstandsfläche des Reifens in einen bewegbaren Bereich und einen nicht bewegbaren Bereich,
wobei der nicht bewegbare Bereich im Wesentlichen keine Bewegung relativ zu einem Substrat des Reifens vorweist, wobei der nicht bewegbare Bereich eine erste Breite aufweist, wobei die erste Breite ein kritischer Schlupfabstand, CSD, ist, wobei der CSD gemäß dem Verfahren nach einem der Ansprüche 1 bis 9 bestimmt wird, und
wobei der bewegbare Bereich Bewegung relativ zu einem Substrat des Reifens vorweist;
Schätzen des Verschleißes des Reifens basierend auf dem Verschleißmodell und der geteilten Aufstandsfläche.

11. Verfahren nach Anspruch 10, wobei der nicht bewegbare Bereich im Wesentlichen keinen Verschleiß bereitstellt.

12. Verfahren nach Anspruch 10,

wobei der CSD vor einem Durchführen des computerimplementierten Verfahrens experimentell bestimmt wird, und
wobei der CSD als eine Eingangsvariable für das computerimplementierte Verfahren verwendet wird.

13. Verfahren nach einem der Ansprüche 10 bis 12, wobei das computerimplementierte Verfahren auf einer Finite-Elemente-Methode, FEM, basiert.

**Revendications**

1. Procédé de détermination d'une distance critique de glissement, CSD, pour un échantillon, le procédé comprenant :

le fait d'exercer une force sur l'échantillon en direction d'une surface de glissement ;
le fait de faire glisser l'échantillon n fois le long de la surface de glissement sur une pluralité d'intervalles,
la pluralité d'intervalles ayant des largeurs différentes w, n étant un nombre entier $\geq 1$ ;
le fait de déterminer, pour chaque largeur $w_i$, un taux d'usure respectif $m(w_i) = \Delta M/(n * w_i)$ d'une pluralité de taux d'usure m(w), dans lequel $\Delta M$ est une différence de poids de l'échantillon après glissement de l'échantillon sur n intervalles de largeur $w_i$ par rapport à avant le glissement ; et
le fait de déterminer, sur la base de la pluralité de taux d'usure et des largeurs respectives, la CSD en tant que largeur $w_o$, dans lequel, pour tout $w > w_o$,

$$\frac{\partial m(w)}{\partial w} = 0.$$

2. Procédé selon la revendication 1, dans lequel les largeurs $w_i$ de la pluralité d'intervalles sont des diviseurs entiers d'une longueur totale de la surface de glissement.

3. Procédé selon l'une quelconque des revendications précédentes, comprenant en outre :

le fait de faire glisser l'échantillon sur plusieurs intervalles de chaque largeur $w_i$ ;
le fait d'obtenir la différence de poids $\Delta M$ en pesant l'échantillon avant et après le glissement sur n intervalles de largeur $w_i$ ; et
le fait de déterminer le taux d'usure en fonction de la différence de poids $\Delta M$ et de la distance totale de glissement.

4. Procédé selon la revendication 3, dans lequel la distance totale de glissement est égale pour chacune des largeurs $w_i$.

5. Procédé selon l'une quelconque des revendications 3 ou 4,

dans lequel la force est levée après glissement de l'échantillon le long de chacun des intervalles ; et

la force est réappliquée avant glissement de l'échantillon le long de l'intervalle suivant.

6. Procédé selon l'une quelconque des revendications précédentes,

dans lequel l'échantillon est glissé le long de la surface de glissement à une vitesse pratiquement constante.

7. Procédé selon l'une quelconque des revendications précédentes, comprenant en outre :

l'identification d'une première distance le long de laquelle la force de frottement statique dépasse la force de frottement de glissement ;

l'identification d'une seconde distance le long de laquelle la force de frottement de glissement dépasse la force de frottement statique ; et

le fait de déterminer la CSD en fonction de la première distance.

8. Procédé selon l'une quelconque des revendications précédentes, comprenant en outre :

le fait de fournir une surface de glissement d'une longueur totale ;

le fait de faire glisser l'échantillon sur la surface de glissement plusieurs fois par étapes de chacune de la pluralité de largeurs w ; et

le fait de mesurer la pluralité de taux d'usure pour chacune de la pluralité de largeurs w.

9. Procédé selon l'une quelconque des revendications précédentes, dans lequel la CSD est mesurée sur la base de l'un parmi

une géométrie de l'échantillon,

une propriété matérielle de l'échantillon,

une texture de la surface de glissement,

une quantité de la force,

une valeur de la vitesse de glissement,

une quantité d'accélération pour atteindre la vitesse de glissement fixée, et

une température de l'échantillon.

10. Procédé mis en œuvre par ordinateur pour estimer l'usure d'un pneu, comprenant :

le fait de fournir un modèle d'usure du pneu conçu pour convertir un taux d'énergie de frottement en un taux d'usure,

dans lequel le modèle d'usure est basé sur des pièces mobiles et non mobiles, les pièces mobiles présentant une usure plus importante que les pièces non mobiles ;

le fait de diviser une zone de contact du pneu en une région mobile et une région non mobile,

dans lequel la région non mobile ne présente pratiquement aucun mouvement par rapport au substrat du pneu, dans lequel la région non mobile présente une première largeur, dans lequel la première largeur est une distance critique de glissement, CSD, dans lequel la CSD est déterminée selon le procédé selon l'une quelconque des revendications 1 à 9, et

dans lequel la région mobile se déplace par rapport au substrat du pneu ;

l'estimation de l'usure du pneu sur la base du modèle d'usure et de la zone de contact divisée.

11. Procédé selon la revendication 10, dans lequel la région non mobile ne s'use pratiquement pas.

12. Procédé selon la revendication 10,

dans lequel la CSD est déterminée expérimentalement avant l'exécution du procédé mis en œuvre par ordinateur, et

dans lequel la CSD est utilisée comme variable d'entrée pour le procédé mis en œuvre par ordinateur.

13. Procédé selon l'une quelconque des revendications 10 à 12, dans lequel le procédé mis en œuvre par ordinateur est basé sur un procédé d'éléments finis, FEM.

FIG. 1

FIG. 2

Interval width: 4 mm

FIG. 3

EP 4 375 091 B1

EP 4 375 091 B1

FIG. 4

Interval width: 24 mm

FIG. 5

FIG. 6

FIG. 7

EP 4 375 091 B1

*FIG. 8*

FIG. 9

1000

Providing a wear model of the tire
configured to convert a frictional energy
rate into a wear, wherein the wear
model is based on moveable and non-
moveable parts, with the moveable
parts providing higher wear than the
non-moveable parts ——1010

Dividing a contact patch of the tire into
a moveable part and a non-moveable
part, wherein the non-moveable part
exhibits substantially no movement
relative to a substrate of the tire, and
wherein the moveable part exhibits
movement relative to a substrate of the
tire ——1020

Estimating the wear of the tire based on
the wear model and the divided contact ——1030
patch.

*FIG. 10*

FIG. 11

FIG. 12

EP 4 375 091 B1

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Non-patent literature cited in the description

- **EMAMI ANAHITA et al.** Investigation of tribological behavior of StyreneButadiene Rubber compound on asphalt-like surfaces. *Tribology International*, August 2019, vol. 136, 487-495

- **CHO J. R. et al.** Abrasive wear amount estimate for 3D patterned tire utilizing frictional dynamic rolling analysis. *Tribology International*, July 2011, vol. 44 (7-8), 850-858